# FASCICULE DE BREVET EUROPEEN

(11) **EP 3 107 193 B1**
(45) Date de publication et mention de la délivrance du brevet: **07.02.2024**
(21) Numéro de dépôt: 16174846.2
(22) Date de dépôt: 16.06.2016
(51) Int. Cl.: H02K 1/278, H02K 1/32

(54) **ROTOR À TÔLES EMPILÉES**
ROTOR MIT STAPELBLECHEN
STACKED-PLATE ROTOR

(30) Priorité: 16.06.2015 FR 1555467
(43) Date de publication de la demande: 21.12.2016
(73) Titulaire: BHG, 68220 Attenschwiller (FR)
(72) Inventeur: PASQUIER, Patrick, 74300 CLUSES (FR); VUARCHEX, Alain, 74970 MARIGNIER (FR)
(74) Mandataire: Littolff, Denis

(56) Documents cités:
- EP-A1- 1 533 883
- WO-A2-2014/029629
- DE-A1-102010 054 920
- DE-A1-102012 221 422
- US-A- 5 237 737
- US-A- 5 345 669

## Description

La présente invention concerne un rotor pour machine électrique tournante synchrone à aimants permanents, par exemple des moteurs électriques sans balais, ainsi qu'un procédé de fabrication de tels rotors. Ces machines tournantes se composent en pratique essentiellement d'un stator comportant un bobinage alimenté en triphasé, générant par conséquent un champ magnétique tournant à la fréquence d'alimentation, et d'un rotor au niveau duquel le champ magnétique est produit par des aimants permanents.

Des rotors similaires pour machines électriques tournantes synchrones à aimants permanents et des procédés similaires de fabrication d'un rotor pour machines électriques tournantes synchrones à aimants permanents sont notamment décrits dans les documents US5237737 A, EP1533883 A1, DE102012221422 A1, WO2014/029629 A2 et US5345669 A.

En reprenant l'exemple ci-dessus, utilisé à titre préférentiel mais non exclusif dans la suite, les moteurs sans balais présentent de nombreux avantages dans nombre d'applications, par comparaison avec les autres moteurs à courant continu aussi bien qu'avec les moteurs asynchrones. Ils suppriment en particulier tous les inconvénients des moteurs à courant continu classiques résultant des contacts mécaniques entre balais et collecteur, comme les problèmes de commutation, le défrettage ou l'usure au niveau des balais ou des frettes. La durée de vie des machines tournantes sans balais s'en trouve notablement augmentée.

Par ailleurs, le rotor à aimants permanents fixés sur la périphérie entraîne une réduction de l'inertie par rapport à celle qui existe dans une machine équivalente à rotor bobiné. C'est un paramètre intéressant notamment en termes de rendement, en particulier dans les phases de démarrage et d'accélération. Thermiquement, ces moteurs sont également avantageux, le refroidissement étant plus immédiat puisque les pertes joules n'existent qu'au niveau du stator, où elles sont plus faciles à évacuer.

D'une manière générale, à performances égales, leur rendement est meilleur que celui des autres machines, pour un encombrement qui est en général moindre.

Leur simplicité d'utilisation, et notamment la possibilité de variation de la vitesse de rotation par simple variation de la tension d'alimentation, fait qu'aujourd'hui les machines tournantes sans balais sont largement utilisées dans de nombreux domaines. Elles y concurrencent de fait les machines tournantes asynchrones, dont elles présentent la robustesse et un coût équivalent sans en avoir certaines limitations, notamment au démarrage et en termes de performances brutes.

Dans les machines sans balais, une pluralité d'aimants en forme de plaquette est fixée, par exemple par collage, sur le moyeu du rotor. Pour mémoire, bien que dans la plupart des cas le rotor de telles machines est placé à l'intérieur du stator, la configuration inverse, rotor à l'extérieur, existe aussi. Les plaquettes des aimants sont fixées sur la surface interne du moyeu s'il s'agit d'un rotor externe ou sur la surface externe s'il s'agit d'un rotor interne.

Le moyeu, dans un rotor interne, est classiquement usiné par décolletage d'un barreau métallique, c'est-à-dire au moyen d'une opération de tournage contraignante. La surface cylindrique obtenue à l'issue du décolletage constitue le support sur lequel les aimants sont fixés. Cette technologie de fabrication permet certes d'obtenir des solides de révolution en principe adéquats pour cet usage, mais sans grande latitude quant aux formes finales possibles, sauf à rendre les opérations d'usinage encore plus contraignantes et en alourdissant sensiblement les coûts de production.

Dans le domaine des machines tournantes, dont le fonctionnement repose sur l'établissement permanent de circuits magnétiques entre le stator et le rotor, l'utilisation de culasses en matériau massif pose en outre le problème des courants induits. Ces courants dits de Foucault sont générés dans les masses pleines des pièces magnétiques, comme par exemple le rotor dans une application à une machine électrique tournante, et induisent des pertes dommageables en termes de rendement.

C'est la raison pour laquelle le rotor pour machine électrique tournante à aimants permanents selon l'invention, rotatif autour d'un axe central longitudinal et comprenant classiquement une pluralité d'aimants permanents fixés sur un moyeu, est tel que ledit moyeu est basé sur un empilement de tôles solidarisées les unes aux autres, les aimants permanents étant classiquement fixés sur une surface périphérique du moyeu.

L'utilisation de tôles est avantageuse à plusieurs égards : en premier lieu, elles sont en général fabriquées par découpage, procédé qui permet de définir les formes extérieures de manière extrêmement souple pour un coût peu élevé, qui ne diffère d'ailleurs pas sensiblement selon la diversité, voire la complexité des profils à découper. L'empilement des tôles conduit en second lieu à un feuilletage du moyeu qui limite la circulation des courants de Foucault, et par conséquent l'échauffement du circuit magnétique. Le rendement global du moteur s'en trouve amélioré, et il devient corollairement possible de diminuer son dimensionnement. La diminution de l'encombrement peut s'avérer un avantage précieux dans certaines applications, par exemple lorsqu'un moteur d'entraînement doit être inséré dans un environnement tubulaire dont le diamètre est prévu dans un intervalle d'amplitude limitée. C'est le cas notamment pour l'entraînement de volets roulants, lorsque le moteur est placé dans le conduit tubulaire, ou moyeu, autour duquel est enroulé le volet.

La variété des formes qui peut résulter des opérations de découpage des tôles permet en outre de réaliser des profils périphériques qui constituent, après empilement constitutif du moyeu, des repères de positionnement des aimants permanents.

Les tôles de faible épaisseur qui sont utilisées peuvent en pratique être découpées par emboutissage et, comme évoqué auparavant, il devient possible de réaliser des profils très précis en périphérie des formes découpées. Les repères issus des profils des tôles peuvent alors servir de référentiels de positionnement pour permettre une répartition homogène des aimants sur la périphérie du rotor, indépendamment de la géométrie desdits aimants.

L'idée est de prévoir que le profil de découpe externe de chaque tôle conduise à l'obtention, après assemblage, d'une division de la surface périphérique du moyeu permettant de positionner le plus précisément possible les aimants permanents en vue de leur fixation. La précision de placement des aimants qui résulte de cette caractéristique représente un avantage considérable, d'abord sur un plan mécanique car plus le positionnement est précis, plus la symétrie circulaire du solide de révolution qu'est le rotor est garantie, et plus le fonctionnement rotatif est fluide. On évite ainsi, autant que possible, tout déplacement parasite de l'axe d'inertie causé par un déséquilibre massique, générant un balourd indésirable se traduisant par un moment d'inertie dégradant la qualité de la rotation.

Pour ce qui concerne le fonctionnement électromagnétique, la précision de positionnement née de l'existence de ces logements a également une incidence importante en ce qu'elle touche à la structure instantanée des circuits magnétiques, et permet un positionnement parfaitement réparti et régulier des pôles magnétiques, participant de ce fait aussi à l'amélioration de la qualité de rotation du rotor.

La présente invention a pour objet un rotor pour machine électrique tournante synchrone à aimants permanents, tel que défini dans la revendication 1, et un procédé de fabrication d'un rotor pour machine électrique tournante synchrone à aimants permanents, tel que défini dans la revendication 12.

Dans l'invention, les tôles présentent un profil périphérique identique comportant une pluralité de reliefs aboutissant à la création de nervures axiales lorsque les tôles sont empilées, ce qui était utilisé dans l'art antérieur lors du placement des aimants, mais pour les centrer plus que pour les positionner.

Par ailleurs, au moins un aimant permanent est positionné dans un espace constitué entre deux nervures adjacentes, le ou les aimants présentant une face interne encadrée par deux côtés latéraux s'ajustant sur la surface périphérique du moyeu. L'invention consiste en ce que chaque aimant permanent est positionné à l'identique par rapport aux nervures dans chaque espace exclusivement vers la droite ou exclusivement vers la gauche, avec un même côté latéral plaqué au contact de la nervure située du même côté dudit espace.

Le jeu fonctionnel nécessaire à l'implantation initiale d'allure radiale des aimants dans les espaces entre les nervures ne doit pas entraver le caractère homogène de leur répartition, et on choisit en d'autres termes de plaquer au moment du montage tous les aimants contre la nervure placée du même côté de l'espace dans lequel ils sont disposés, exclusivement vers la droite ou exclusivement vers la gauche, selon le cas. Cet agencement vise également à minimiser les disparités résultant de la dispersion dimensionnelle à la fabrication.

Selon une configuration préférentielle, les aimants sont conformés en tuile dont la face interne concave est de même rayon de courbure que la surface périphérique du moyeu.

Dans cette configuration, les aimants ont une géométrie plutôt allongée, et se présentent sous forme de plaquettes incurvées d'allure « rectangulaire », en une seule pièce ou constituées de plusieurs pièces alignées, voire aboutées parallèlement aux nervures. Dans ce cas, la section transversale des aimants est pour l'essentiel une portion de couronne. L'aide au positionnement réalisée par les nervures est alors assurée principalement dans des directions tangentielles au rotor, les nervures permettant un guidage initial plutôt d'allure radiale et assurant un rôle de butées « transversales » (tangentielles) pour leur maintien ultérieur en bonne position.

Les nervures et les aimants permanents conformés en tuile peuvent comporter, selon l'invention, au moins une face latérale plane de même orientation lorsque l'aimant est en butée au fond de l'espace axial délimité entre deux nervures adjacentes. Les tuiles sont positionnées au contact d'une telle face latérale d'une des deux nervures délimitant l'espace axial de réception des aimants, toujours du même côté.

Ces nervures peuvent par exemple avoir une section d'allure triangulaire ou trapézoïdale, dont les faces latérales ont une orientation d'allure radiale.

De préférence encore, la hauteur des nervures, considérée dans une direction radiale, est inférieure à l'épaisseur des aimants, prise dans une direction également radiale. Dans ce cas, le positionnement/calage périphérique des aimants permanents ne s'effectue qu'au niveau de la base des aimants, à l'endroit du contact avec la face latérale de même orientation des nervures axiales, toujours du même côté des logements délimités entre deux nervures adjacentes.

Pour donner au rotor son caractère construit d'unité solide, qui ne résulte plus directement de la fabrication comme c'était le cas lorsqu'il était obtenu par décolletage, il faut que les tôles qui le constituent soit assemblées puis fixées. Selon l'invention, elles sont perforées de trous traversants, le moyeu comprenant au moins un axe d'assemblage traversant l'ensemble des tôles empilées. Un axe d'assemblage du rotor peut à cet égard et préférentiellement être un arbre central, relié bloqué en rotation aux tôles empilées, et qui devient en réalité l'arbre d'entraînement du moteur. Cet arbre central apporte de plus une rigidité supplémentaire à l'empilement de tôles. Une variante à agrafes générées directement dans les tôles est également possible pour l'assemblage du moyeu du rotor. Plus précisément, chaque tôle peut alors comporter une ou plusieurs agrafes venue(s) d'une seule pièce avec ladite tôle en vue de sa fixation à au moins une autre tôle.

L'invention concerne également une machine électrique tournante comprenant un rotor tel que décrit ci-dessus. De manière très avantageuse, selon l'invention, les tôles du rotor peuvent être découpées dans le noyau central résiduel d'une tôle utilisée pour la découpe d'au moins une pièce en couronne entrant dans la constitution du stator. La pièce rotorique est alors issue de la partie entourée par la couronne.

Cela procure une économie substantielle à la fabrication, comme on le verra plus en détail dans la suite.

L'invention concerne encore l'utilisation d'une telle machine électrique tournante pour l'entraînement d'un volet roulant motorisé. L'optimisation de rendement permise par la structure du rotor objet de l'invention et la réduction dimensionnelle qui en résulte pour des puissances équivalentes rend l'invention particulièrement adaptée à ce domaine, dans lequel le critère d'encombrement est fondamental.

Il doit en effet être possible de loger ce moteur dans une structure tubulaire de diamètre réduit, en l'espèce le moyeu tubulaire autour duquel le volet est enroulé.

L'invention concerne enfin un procédé de fabrication d'un rotor pour machine électrique tournante synchrone à aimants permanents comprenant une pluralité d'aimants permanents fixés sur un moyeu constitué de tôles présentant un profil périphérique identique comportant une pluralité de reliefs, le moyeu étant obtenu par empilement et solidarisation des tôles les unes aux autres, les reliefs desdites tôles étant mis en correspondance pour aboutir à la création de nervures axiales délimitant des espaces, chaque aimant permanent présentant une face interne encadrée par deux faces latérales s'ajustant sur la surface périphérique du moyeu, procédé caractérisé en ce qu'il comporte l'étape suivante :
- positionnement d'au moins un aimant permanent, dans chaque espace constitué entre deux nervures adjacentes exclusivement vers la droite ou exclusivement vers la gauche, le même côté latéral de chaque aimant étant plaqué au contact de la nervure située du même côté de chaque espace.

Comme mentionné auparavant, le positionnement réalisé par les nervures est alors assuré principalement dans des directions tangentielles au rotor, les nervures assurant un rôle de butées « transversales » (tangentielles) pour le positionnement des aimants. La nervure située « du même côté » de chaque espace s'entend donc dans une direction tangentielle, lorsqu'un sens de déplacement est fixé.

Plus précisément, selon ledit procédé, les aimants étant conformés en tuile dont la face interne concave est de même rayon de courbure que la surface périphérique du moyeu, et les nervures et les aimants permanents comportant une face latérale plane de même orientation lorsque chaque aimant est en butée au fond de l'espace délimité entre deux nervures adjacentes, chaque aimant est logé radialement au fond d'un espace entre deux nervures, puis tourné jusqu'à ce que lesdites faces latérales soient mises en contact.

Ce procédé de fabrication garantit une précision maximale à la fabrication, elle-même garante d'une fluidité de fonctionnement autant mécanique que magnétique, et donc de l'obtention d'un rendement de fonctionnement optimal.

L'invention va à présent être décrite en référence aux figures annexées, qui en représentent un exemple de configuration possible, et pour lesquelles :
- la figure 1 est une vue en perspective du noyau magnétique à tôles empilées d'un rotor selon l'invention, aimants non représentés ;
- la figure 2 est une vue en perspective d'un rotor interne selon l'invention ; et
- la figure 3 est une vue en section du rotor de la figure précédente.

Dans tout le document, l'axe longitudinal de la machine est en fait l'axe de rotation du rotor. La longueur du rotor est mesurée selon cet axe, et un angle est mesuré par une rotation selon l'axe longitudinal.

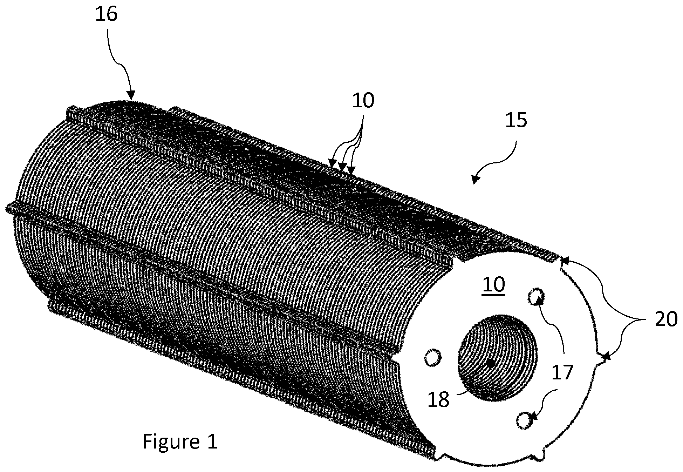

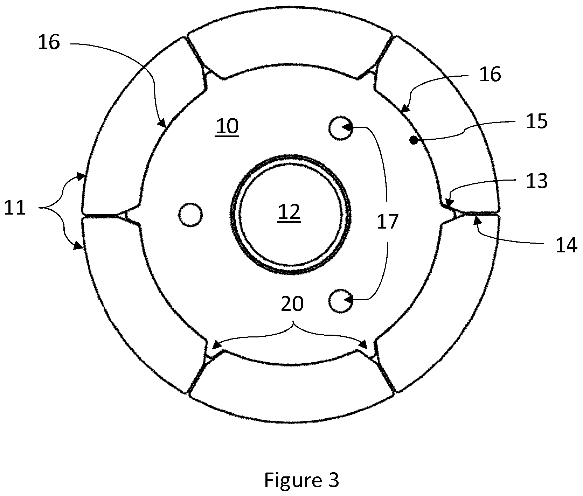

Le rotor de l'invention comporte un moyeu (15) formé d'un empilement de tôles (10), représenté par exemple en figure 1, les tôles (10) qui le constituent, toutes de même section, apparaissant particulièrement clairement en figure 3.

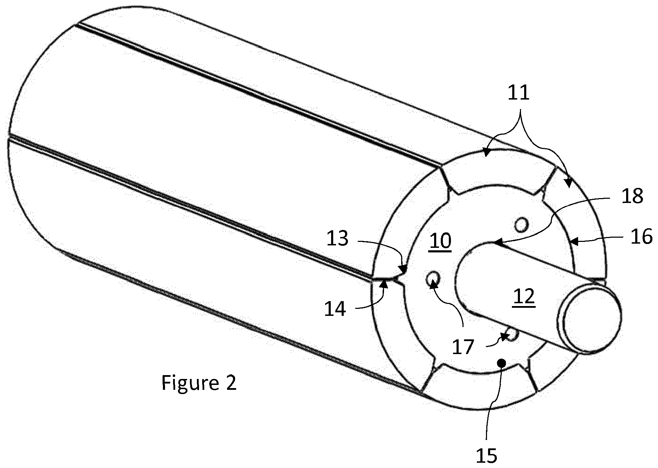

Ces tôles sont revêtues d'une pluralité d'aimants (11) identiques, qui sont représentés en figures 2 et 3, et sont fixés sur la périphérie du moyeu (15). Les aimants (11) sont des aimants permanents, par exemple en ferrite. Ils ont en pratique la forme de plaquettes de quelques millimètres d'épaisseur et sont en l'occurrence des tuiles de forme concave épousant la convexité correspondante de la surface périphérique (16) du moyeu (15), dans les emplacements qui leur sont dévolus.

Selon l'invention, le moyeu (15) du rotor comprend, sur sa surface périphérique (16), une pluralité de nervures axiales (20) agencées pour servir de moyens de positionnement/calage des aimants (11). Dans la configuration représentée aux différentes figures, ceci se traduit par l'existence de dents qui font saillie sur la périphérie circulaire des tôles (10) et qui, mises dans le prolongement de dents identiques des autres tôles (10) formant le moyeu (15), créent des nervures axiales (20) (voir en particulier en figure 1).

Dans l'exemple illustré par les figures, le rotor est un rotor interne. Son moyeu (15), bien visible en figure 1, est cylindrique et présente six nervures (20) régulièrement réparties sur sa surface périphérique. Lesdites nervures (20) sont distantes l'une de l'autre d'un angle de 60°. Le nombre de nervures (20), et par conséquent le nombre d'aimants (11), peut bien sûr être modifié.

Dans la configuration illustrée, les nervures (20), ou les dents des tôles (10) individuelles, ont une forme sensiblement trapézoïdale, et leur hauteur est inférieure à l'épaisseur des plaquettes aimantées (11). Les chants latéraux des aimants (11) présentent dans ce cas deux faces (13, 14) séparées par une arête axiale. L'orientation des faces des nervures de section trapézoïdale, en combinaison avec l'existence, l'orientation et la largeur de ces faces (13, 14), permet un positionnement extrêmement précis des aimants (11). Le logement formé entre deux nervures (20) adjacentes autorise un centrage initial des aimants (11) du fait de l'orientation évasée des faces latérales des nervures (20) symétriques par rapport à un plan médian passant par l'axe longitudinal du rotor et par la ligne axiale médiane du logement, orientation qui correspond à celles des faces latérales (13) des aimants (11) proximales de la surface cylindrique (16) du moyeu (15), ce qui permet à l'aimant (11) de s'auto-centrer dans un premier temps dans la forme interne des logements.

Le positionnement ou calage final des aimants (11) est obtenu par contact d'une des deux faces latérales (13) de chaque aimant (11) contre la face latérale d'une des deux nervures (20) constituant un logement, toujours la même nervure (20) relativement au logement, c'est-à-dire toujours la nervure (20) de droite ou toujours la nervure de gauche du logement, selon le cas. En prenant la représentation des figures 2 et 3, les aimants permanents (11) sont par exemple tous au contact de la nervure (20) de gauche de chaque logement.

Le moyeu (15) comprenant une pluralité de tôles empilées (10), celles-ci doivent être solidarisées pour qu'il constitue une unité solide à laquelle fixer les aimants (11), de manière à former un moyeu unitaire (15) tel que celui qui apparaît par exemple en figure 1. Les tôles sont perforées à cet effet, chacune présentant des trous (17, 18) formant après assemblage un ou plusieurs conduits tubulaires traversants, parcourant axialement le moyeu (15). Ce dernier comprend ensuite au moins un axe d'assemblage (12) (voir en particulier en figure 2) traversant l'ensemble des tôles (10) pour les solidariser. Quel que soit le type de rotor, externe ou interne, on peut prévoir plusieurs axes d'assemblage répartis au voisinage du pourtour du rotor, et traversant les tôles à travers les trous (17) : trois trous (17) sont en l'occurrence prévus pour trois axes sur les figures 1 et 3. Dans le cas d'un rotor interne, on peut prévoir, à la place ou en complément, un arbre central (12) porteur traversant les tôles à travers un trou central (18), qui a d'une part éventuellement une fonction d'assemblage en vue du maintien empilé des tôles et forme d'autre part et principalement l'arbre de rotation et d'entrainement du rotor. Alternativement ou en complément, les tôles (10) du rotor peuvent également être assemblées au moyen d'agrafes générées directement dans les tôles (10) (non représentées).

Ce mode de réalisation du moyeu (15) est particulièrement avantageux. En effet, la découpe des tôles (10) par emboutissage permet de réaliser aisément les nervures (20) sur la paroi périphérique (16) du moyeu (15), ainsi que les orifices et trous (17, 18) intérieurs. Également, la découpe des tôles (10) du rotor peut être faite dans les chutes intérieures de découpe de tôles statoriques, l'ensemble des découpes s'effectuant alors de préférence en une seule opération.

Ce mode de réalisation du rotor par tôles minces empilées est donc doublement avantageux, d'abord par sa souplesse, les configurations à obtenir étant très aisément modifiables et adaptables du fait des avantages propres à la fabrication par découpage/emboutissage, laquelle permet ensuite une optimisation des coûts par rapport à des technologies d'usinage classiques, par une possibilité de production simultanée ou quasi simultanée des tôles rotoriques et statoriques.

L'invention ne se limite pas aux exemples illustrés par les figures annexées, elle englobe les variations qui entrent dans la portée des revendications.

## Revendications

1. Rotor pour machine électrique tournante synchrone à aimants permanents (11), rotatif autour d'un axe central longitudinal et comprenant une pluralité d'aimants permanents (11) fixés sur un moyeu (15), le moyeu (15) comportant un empilement de tôles (10) solidarisées les unes aux autres, lesdites tôles (10) présentant un profil périphérique identique comportant une pluralité de reliefs aboutissant à la création de nervures axiales (20) lorsque les tôles (10) sont empilées, chaque aimant permanent (11) étant positionné dans un espace constitué entre deux nervures axiales (20) adjacentes, chaque aimant permanent (11) présentant une face interne encadrée par deux côtés latéraux s'ajustant sur la surface périphérique (16) du moyeu (15), **caractérisé en ce que** chaque aimant permanent (11) est positionné à l'identique par rapport aux deux nervures axiales (20) adjacentes dans chaque espace exclusivement vers la droite dudit espace ou exclusivement vers la gauche dudit espace, avec un même côté latéral de chaque aimant permanent (11) plaqué au contact de la nervure axiale (20) située exclusivement du même côté droit ou gauche de chaque espace, au moment d'un montage.

2. Rotor selon la revendication précédente, **caractérisé en ce que** les aimants permanents (11) sont conformés en tuile dont la face interne concave est de même rayon de courbure que la surface périphérique (16) du moyeu (15).

3. Rotor selon la revendication précédente, **caractérisé en ce que** les nervures axiales (20) et les aimants permanents (11) comportent une face latérale plane (13) de même orientation lorsque chaque aimant permanent (11) est en butée au fond de chaque espace délimité entre deux nervures axiales (20) adjacentes.

4. Rotor selon l'une des revendications précédentes, **caractérisé en ce que** les nervures axiales (20) ont une section d'allure triangulaire ou trapézoïdale.

5. Rotor selon l'une des revendications précédentes, **caractérisé en ce que** la hauteur des nervures axiales (20), considérée dans une direction radiale, est inférieure à l'épaisseur des aimants permanents (11), prise dans une direction également radiale.

6. Rotor selon l'une quelconque des revendications précédentes, **caractérisé en ce que** les tôles (10) sont perforées de trous traversants (17, 18), le moyeu (15) comprenant au moins un axe d'assemblage (12) traversant l'ensemble des tôles (10) empilées.

7. Rotor selon la revendication précédente, **caractérisé en ce qu'**un axe d'assemblage (12) est un arbre central (12) relié bloqué en rotation aux tôles (10) empilées.

8. Rotor selon l'une des revendications précédentes, **caractérisé en ce que** chaque tôle (10) comporte une ou plusieurs agrafes venue(s) d'une seule pièce avec ladite tôle (10) en vue de sa fixation à au moins une autre tôle (10).

9. Machine électrique tournante synchrone à aimants permanents (11) comprenant un rotor selon l'une des revendications précédentes.

10. Machine électrique tournante synchrone à aimants permanents (11) selon la revendication précédente comportant un stator et un rotor comportant des tôles (10) empilées, **caractérisée en ce que** les tôles (10) du rotor sont découpées dans le noyau central résiduel d'une tôle (10) utilisée pour la découpe d'au moins une pièce en couronne entrant dans la constitution du stator.

11. Utilisation d'une machine électrique tournante synchrone à aimants permanents (11) selon l'une des revendications 9 et 10 pour l'entrainement d'un moyeu de volet roulant motorisé.

12. Procédé de fabrication d'un rotor pour machine électrique tournante synchrone à aimants permanents (11) comprenant une pluralité d'aimants permanents (11) fixés sur un moyeu (15) constitué de tôles (10) présentant un profil périphérique identique comportant une pluralité de reliefs, le moyeu (15) étant obtenu par empilement et solidarisation des tôles (10) les unes aux autres, les reliefs desdites tôles (10) étant mis en correspondance pour aboutir à la création de nervures axiales (20) délimitant des espaces, chaque aimant permanent (11) présentant une face interne encadrée par deux côtés latéraux s'ajustant sur la surface périphérique (16) du moyeu (15), **caractérisé en ce qu'**il comporte l'étape suivante :
- positionnement de chaque aimant permanent (11) par rapport aux deux nervures axiales (20) adjacentes, dans chaque espace constitué entre deux nervures axiales (20) adjacentes exclusivement vers la droite dudit espace ou exclusivement vers la gauche dudit espace, le même côté latéral de chaque aimant permanent (11) étant plaqué au contact de la nervure axiale (20) située exclusivement du même côté droit ou gauche de chaque dudit espace, au moment du montage.

13. Procédé de fabrication d'un rotor pour machine électrique tournante synchrone à aimant permanents (11) selon la revendication précédente, **caractérisé en ce que**, les aimants permanents (11) étant conformés en tuile dont la face interne concave est de même rayon de courbure que la surface périphérique (16) du moyeu (15), et les nervures axiales (20) et les aimants permanents (11) comportant une face latérale plane (13) de même orientation lorsque chaque aimant permanents (11) est en butée au fond de chaque espace délimité entre deux nervures axiales (20) adjacentes, chaque aimant permanents (11) est logé radialement au fond d'un espace entre deux nervures axiales (20) adjacentes, puis tourné jusqu'à ce que lesdites faces latérales soient mises en contact.

## Patentansprüche

1. Rotor für eine synchron drehende elektrische Maschine mit Permanentmagneten (11), der um eine zentrale Längsachse drehbar ist und eine Vielzahl von Permanentmagneten (11) umfasst, die an einer Nabe (15) befestigt sind, wobei die Nabe (15) einen Stapel von Blechen (10) umfasst, die fest miteinander verbunden sind, wobei die Bleche (10) ein identisches Umfangsprofil mit einer Vielzahl von Erhebungen aufweisen, die zur Bildung von axialen Rippen (20) führen, wenn die Bleche (10) gestapelt sind, wobei jeder Permanentmagnet (11) in einem Raum positioniert ist, der zwischen zwei benachbarten axialen Rippen (20) ausgebildet ist, wobei jeder Permanentmagnet (11) eine Innenfläche aufweist, die von zwei Seitenabschnitten eingerahmt wird, die sich an die Umfangsfläche (16) der Nabe (15) anpassen, **dadurch gekennzeichnet, dass** jeder Permanentmagnet (11) in Bezug auf die beiden benachbarten axialen Rippen (20) in jedem Raum identisch ausschließlich zur rechten Seite des Raums oder ausschließlich zur linken Seite des Raums positioniert ist, mit einem gleichen Seitenabschnitt jedes Permanentmagneten (11), der in den Kontakt mit der axialen Rippe (20) gepresst ist, die sich zum Zeitpunkt einer Montage ausschließlich im gleichen rechten oder linken Seitenabschnitt jedes Raums befindet.

2. Rotor nach dem vorstehenden Anspruch,
**dadurch gekennzeichnet, dass** die Permanentmagnete (11) der Form eines Dachziegels entsprechen, dessen konkave Innenfläche den gleichen Krümmungsradius wie die Umfangsfläche (16) der Nabe (15) aufweist.

3. Rotor nach dem vorstehenden Anspruch, **dadurch gekennzeichnet, dass** die axialen Rippen (20) und die Permanentmagnete (11) eine ebene Seitenfläche (13) mit gleicher Ausrichtung aufweisen, wenn jeder Permanentmagnet (11) am Boden jedes Raums anliegt, der zwischen zwei benachbarten axialen Rippen (20) begrenzt ist.

4. Rotor nach einem der vorstehenden Ansprüche,
**dadurch gekennzeichnet, dass** die axialen Rippen (20) einen Querschnitt mit dreieckigem oder trapezförmigem Verlauf aufweisen.

5. Rotor nach einem der vorstehenden Ansprüche,
**dadurch gekennzeichnet, dass** die Höhe der axialen Rippen (20), in einer radialen Richtung betrachtet, geringer ist als die Dicke der Permanentmagnete (11), in einer ebenfalls radialen Richtung betrachtet.

6. Rotor nach einem der vorstehenden Ansprüche,
**dadurch gekennzeichnet, dass** die Bleche (10) mit Durchgangslöchern (17, 18) perforiert sind, wobei die Nabe (15) mindestens eine Verbindungsachse (12) umfasst, die durch die Gesamtheit der Stapelbleche (10) verläuft.

7. Rotor nach dem vorstehenden Anspruch, **dadurch gekennzeichnet, dass** eine Verbindungsachse (12) eine zentrale Welle (12) ist, die drehfest mit den Stapelblechen (10) verbunden ist.

8. Rotor nach einem der vorstehenden Ansprüche,
**dadurch gekennzeichnet, dass** jedes Blech (10) eine oder mehrere Klammern aufweist, die einstückig mit dem Blech (10) zur Befestigung an mindestens einem anderen Blech (10) ausgebildet sind.

9. Synchron drehende elektrische Maschine mit Permanentmagneten (11), umfassend einen Rotor nach einem der vorstehenden Ansprüche.

10. Synchron drehende elektrische Maschine mit Permanentmagneten (11) nach dem vorstehenden Anspruch mit einem Stator und einem Rotor mit Stapelblechen (10), **dadurch gekennzeichnet, dass** die Bleche (10) des Rotors aus dem verbleibenden zentralen Kern eines Blechs (10) ausgeschnitten sind, das zum Ausschneiden mindestens eines kranzförmigen Stücks verwendet wird, das am Ausbilden des Stators beteiligt ist.

11. Verwendung einer synchron drehenden elektrischen Maschine mit Permanentmagneten (11) nach einem der Ansprüche 9 oder 10 zum Antrieb einer motorisierten Rollladennabe.

12. Verfahren zur Herstellung eines Rotors für eine synchron drehende elektrische Maschine mit Permanentmagneten (11), umfassend eine Vielzahl von Permanentmagneten (11), die auf einer Nabe (15) befestigt sind, die aus Blechen (10) ausgebildet ist, die ein identisches Umfangsprofil mit einer Vielzahl von Erhebungen aufweisen, wobei die Nabe (15) durch Aufeinanderstapeln und festes Verbinden der Bleche (10) untereinander erhalten wird, wobei die Erhebungen der Bleche (10) in Übereinstimmung gebracht werden, um zur Schaffung von axialen Rippen (20) zu führen, die Räume begrenzen, wobei jeder Permanentmagnet (11) eine Innenfläche aufweist, die von zwei Seitenabschnitten eingerahmt wird, die sich an die Umfangsfläche (16) der Nabe (15) anpassen, **dadurch gekennzeichnet, dass** es den folgenden Schritt aufweist:
- Positionieren jedes Permanentmagneten (11) relativ zu den beiden benachbarten axialen Rippen (20) in jedem Raum, der zwischen zwei benachbarten axialen Rippen (20) ausgebildet ist, ausschließlich nach rechts von dem Raum oder ausschließlich nach links von dem Raum, wobei der gleiche Seitenabschnitt jedes Permanentmagneten (11) zum Zeitpunkt der Montage in Kontakt mit der axialen Rippe (20) gepresst wird, die sich ausschließlich auf dem gleichen rechten oder linken Seitenabschnitt des Raums befindet.

13. Verfahren zur Herstellung eines Rotors für eine synchron drehende elektrische Maschine mit Permanentmagneten (11) nach dem vorstehenden Anspruch, **dadurch gekennzeichnet, dass,** wobei die Permanentmagnete (11) der Form eines Dachziegels entsprechen, dessen konkave Innenfläche denselben Krümmungsradius wie die Umfangsfläche (16) der Nabe (15) hat, und die axialen Rippen (20) und die Permanentmagnete (11) eine ebenen Seitenabschnitt (13) mit derselben Ausrichtung umfassen, wenn jeder Permanentmagnet (11) am Boden jedes zwischen zwei benachbarten axialen Rippen (20) begrenzten Raums anliegt, jeder Permanentmagnet (11) radial am Boden eines Raums zwischen zwei benachbarten axialen Rippen (20) aufgenommen und dann gedreht wird, bis die Seitenflächen in Kontakt gebracht sind.

## Claims

1. Rotor for a synchronous rotating electrical machine having permanent magnets (11), which rotates about a central longitudinal axis and comprises a plurality of permanent magnets (11) attached to a hub (15), the hub (15) comprising a stack of metal sheets (10) secured to each other, said sheets (10) having an identical circumferential profile comprising a plurality of reliefs resulting in the creation of axial ribs (20) when the metal sheets (10) are stacked, each permanent magnet (11) being positioned in a space formed between two adjacent axial ribs (20), each permanent magnet (11) having an inner face surrounded by two lateral sides fitted on the circumferential surface (16) of the hub (15), **characterized in that** each permanent magnet (11) is positioned identically relative to the two adjacent axial ribs (20) in each space exclusively to the right of said space or exclusively to the left of said space, with a same lateral side of each permanent magnet (11) pressed against the axial rib (20) located exclusively on the same right or left side of each space at the time of assembly.

2. Rotor according to the preceding claim, **characterized in that** the permanent magnets (11) are shaped as a tile of which the concave inner face has the same radius of curvature as the circumferential surface (16) of the hub (15).

3. Rotor according to the preceding claim, **characterized in that** the axial ribs (20) and the permanent magnets (11) comprise a flat lateral face (13) of the same orientation when each permanent magnet (11) abuts the bottom of each space defined between two adjacent axial ribs (20).

4. Rotor according to any of the preceding claims, **characterized in that** the axial ribs (20) have a triangular or trapezoidal cross section.

5. Rotor according to any of the preceding claims, **characterized in that** the height of the axial ribs (20), considered in a radial direction, is smaller than the thickness of the permanent magnets (11), taken in a direction that is also radial.

6. Rotor according to any of the preceding claims, **characterized in that** the metal sheets (10) are perforated with through-holes (17, 18), the hub (15) comprising at least one assembly pin (12) which passes through the set of stacked metal sheets (10).

7. Rotor according to the preceding claim, **characterized in that** an assembly pin (12) is a central shaft (12) connected to the stacked metal sheets (10) so as to be locked against rotation.

8. Rotor according to any of the preceding claims, **characterized in that** each metal sheet (10) comprises one or more clips integrally formed with said metal sheet (10) with a view to the attachment thereof to at least one other metal sheet (10).

9. Synchronous rotating electrical machine having permanent magnets (11) comprising a rotor according to any of the preceding claims.

10. Synchronous rotating electrical machine having permanent magnets (11) according to the preceding claim, comprising a stator and a rotor comprising stacked metal sheets (10), **characterized in that** the metal sheets (10) of the rotor are cut from the residual central core of a metal sheet (10) used for cutting at least one ring part which is an integral part of the stator.

11. Use of a synchronous rotating electrical machine having permanent magnets (11) according to one of claims 9 and 10 for driving a motor-driven roller shutter hub.

12. Method for producing a rotor for a synchronous rotating electrical machine having permanent magnets (11) comprising a plurality of permanent magnets (11) attached to a hub (15) consisting of metal sheets (10) having an identical circumferential profile comprising a plurality of reliefs, the hub (15) being obtained by stacking and securing the metal sheets (10) to each other, the reliefs of said metal sheets (10) being correlated to result in the creation of axial ribs (20) which define spaces, each permanent magnet (11) having an inner face surrounded by two lateral sides fitted on the circumferential surface (16) of the hub (15), **characterized in that it** comprises the following step:
- positioning each permanent magnet (11) relative to the two adjacent axial ribs (20) in each space formed between two adjacent axial ribs (20) exclusively to the right of said space or exclusively to the left of said space, the same lateral side of each permanent magnet (11) being pressed against the axial rib (20) located exclusively on the same right or left side each of said space at the time of assembly.

13. Method for producing a rotor for a synchronous rotating electrical machine having permanent magnets (11) according to the preceding claim,
**characterized in that** the permanent magnets (11) are shaped as a tile of which the concave inner face has the same radius of curvature as the circumferential surface (16) of the hub (15), and the axial ribs (20) and the permanent magnets (11) comprise a flat lateral face (13) of the same orientation when each permanent magnet (11) abuts the bottom of each space defined between two adjacent axial ribs (20), each permanent magnet (11) is housed radially at the bottom of a space between two adjacent axial ribs (20), then turned until said lateral faces are brought into contact.
